# EUROPÄISCHE PATENTANMELDUNG

(11) **EP 0 873 921 A2**
(43) Veröffentlichungstag der Anmeldung: **28.10.1998**
(21) Anmeldenummer: 98106879.4
(22) Anmeldetag: 16.04.1998
(51) Int. Cl.: B60S 1/08

(54) **Sensoreinrichtung**

(30) Priorität: 23.04.1997 DE 19716975
(71) Anmelder: ROBERT BOSCH GMBH, 70442 Stuttgart (DE)
(72) Erfinder: Meier, Hans, 77833 Ottersweier (DE); Riehl, Guenther, 77803 Buehlertal (DE); Burkart, Manfred, 76473 Iffezheim (DE)

(57) **Zusammenfassung**

Es wird eine Sensoreinrichtung (10) mit einer Heizeinrichtung (30) vorgeschlagen, die einfach aufgebaut, kostengünstig herzustellen und einfach in der Sensoreinrichtung (10) anzubringen ist. Die Heizeinrichtung (30) umfaßt ein Gehäuse (32) zur Aufnahme eines Heizelements (36) und einen Ansatz (34) mit Aussparungen (44) zur Aufnahme von positionskritischen Bauteilen (20, 22).

## Beschreibung

### Stand der Technik

Die Erfindung geht aus von einer Sensoreinrichtung zur Erfassung des Benetzungs- und/oder Verschmutzungsgrades von Scheiben nach dem Oberbegriff des Hauptanspruchs.

Dabei handelt es sich um sogenannte optische, kapazitive oder resistive Regensensoren. Beispielsweise ist hier ein Regensensor beschrieben, dessen Wirkungsweise auf einem optischen Prinzip beruht. Hierbei wird die von einem Sender ausgesandte Strahlung bekannter Intensität in eine Scheibe eingekoppelt und dort entlang einer Meßstrecke, durch mehrfache Totalreflexion an der Außen- und Innenseite der Scheibe, geleitet. An einer bestimmten Stelle wird die Strahlung durch optische Auskopplung in ein Meßsystem geführt, in der die Restlichtintensität von einem Empfänger gemessen wird.

Schmutzpartikel oder Regentropfen auf der Scheibenoberfläche verändern lokal den Brechungsindex, so daß an diesen Stellen die Strahlung nicht mehr an der Scheibenoberfläche totalreflektiert wird, sondern aus der Scheibe heraustritt. Der hierbei eintretende Intensitätsverlust der detektierten Strahlung ist ein Maß für die Benetzung der Scheibenoberfläche.

Derartige Sensoreinrichtungen werden in Kraftfahrzeugen auf der Innenseite einer Scheibe, beispielsweise der Windschutzscheibe, im Wischbereich der Scheibenwischer angebracht, um die Benetzung der Außenseite der Scheibe zu erfassen. Dabei führt Kondensat auf der Innenseite der Scheibe oder Eisbildung auf der Außenseite der Scheibe ebenfalls zu einer Signalabschwächung, die bei einer automatischen Scheibenwischanlage zu einem unerwünschten Auslösen des Wischbetriebs führen kann.

Aus der DE-OS 44 28 995 ist daher ein Regensensor bekannt, der in seinem zur Scheibe hin offenen Sensorgehäuse ein die Meßstrecke beheizendes Bauelement aufweist, um Kondensat und Eis zu entfernen. Dieses Bauelement ist zweiteilig mit einem U-förmigen Grundkörper und mit einer ein Heizelement kontaktierenden Kontaktplatte ausgebildet. Bei Bestromung des Heizelements über die Kontaktplatte und den Grundkörper wird die erzeugte Wärme über den metallischen Grundkörper der Meßstrecke zugeführt. Vorsprünge am Grundkörper bewirken, daß der Grundkörper einen Abstand zur Scheibe aufweist. Mit der Anbringung des Sensorgehäuses auf der Scheibe wird der U-förmige Grundkörper gegen die Scheibe gedrückt und unter Spannung gebracht, so daß die Grundfläche des Grundkörpers parallel zur Scheibe gerichtet ist. Dies ist erforderlich, da die Befestigung des Bauelements an der Leiterplatte lediglich mittels Anschlußzungen erfolgt, die das Heizelement mit einem Heizstromkreis elektrisch verbinden.

Nachteilig ist hierbei, daß das Bauelement aus mindestens zwei metallischen Teilen besteht, die an mehreren Stellen unterschiedlich abgewinkelt sind und miteinander zusammenwirken. Eventuell müssen diese Teile nachträglich in einer gewünschten Farbe eingefärbt oder beschichtet werden, um ästhetischen Anforderungen zu genügen. Dies bedingt höhere Fertigungskosten.

Nachteilig ist weiterhin, daß das Heizelement zwischen den zwei metallischen Teilen des Bauelements verklebt ist und diese daher miteinander verbindet. Dies erschwert die Einhaltung der äußeren Abmessungen und damit die Paßgenauigkeit des Bauelements.

Diese Sensoreinrichtung hat weiterhin den Nachteil, daß eine genaue Positionierung des beheizbaren Bauelements auf der Leiterplatte wegen der Befestigung mittels Anschlußzungen lediglich mit einem höherem technischen Aufwand, z. B. mit Löthilfen, möglich ist.

### Vorteile der Erfindung

Die erfindungsgemäße Sensoranordnung mit den kennzeichnenden Merkmalen des Hauptanspruchs hat den Vorteil, daß die Heizvorrichtung einfacher aufgebaut, kostengünstiger herzustellen und einfacher an einer Leiterplatte der Sensoreinrichtung anzubringen ist. Hierzu wird ein Heizelement in ein Gehäuse einer Heizeinrichtung aufgenommen.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist, daß das Gehäuse der Heizeinrichtung lediglich auf einer Seite offen ist und das Heizelement in diesem Gehäuse mit einer wärmeleitenden Vergußmasse vergossen ist. Vorzugsweise ist das Gehäuse auf der zur Leiterplatte weisenden Seite offen, um die elektrischen Verbindungsleitungen von dem Heizelement aus dem Gehäuse heraus zur Leiterplatte zu führen. Diese Vorgehensweise erlaubt eine höhere Toleranz bei der Anbringung des Heizelements in der Fertigung, ohne daß die Paßgenauigkeit der Heizeinrichtung verringert wird.

Weiterhin vorteilhaft ist, daß die Heizeinrichtung im wesentlichen ein Gehäuse und einen Ansatz aufweist, die einteilig in Kunststoff in gewünschter Farbe und Form spritztechnisch herstellbar sind. Eine nachträgliche Oberflächenbehandlung entfällt dadurch.

Zur optimalen Befestigung der Heizeinrichtung an der Leiterplatte weist der Ansatz Schnappelemente bzw. Zapfen auf, die in entsprechenden Ausnehmungen und Bohrungen der Leiterplatte einrasten bzw. sich einfügen und somit eine genaue Positionierung der Heizeinrichtung auf der Leiterplatte ermöglichen.

Ein weiterer Vorteil liegt in dem Entfall von Positionierungshilfen in der Fertigung um positionskritische Bauelemente, wie z. B. eine Buchsenleiste zur Steckeraufnahme, sicher zu positionieren. Dafür weist der Ansatz Aussparungen auf, in denen die Bauelemente auf der Leiterplatte positioniert werden und die weitere Positionierungshilfen daher überflüssig machen.

### Zeichnung

Ein Ausführungsbeispiel der Erfindung ist in der Zeichnung dargestellt und in der nachfolgenden Beschreibung näher erläutert. Es zeigen Figur 1 einen Querschnitt eines Regensensors mit Heizeinrichtung, Figur 2 einen Querschnitt der Heizeinrichtung und Figur 3 bis 6 verschiedenen Ansichten der Heizeinrichtung.

### Beschreibung des Ausführungsbeispiels

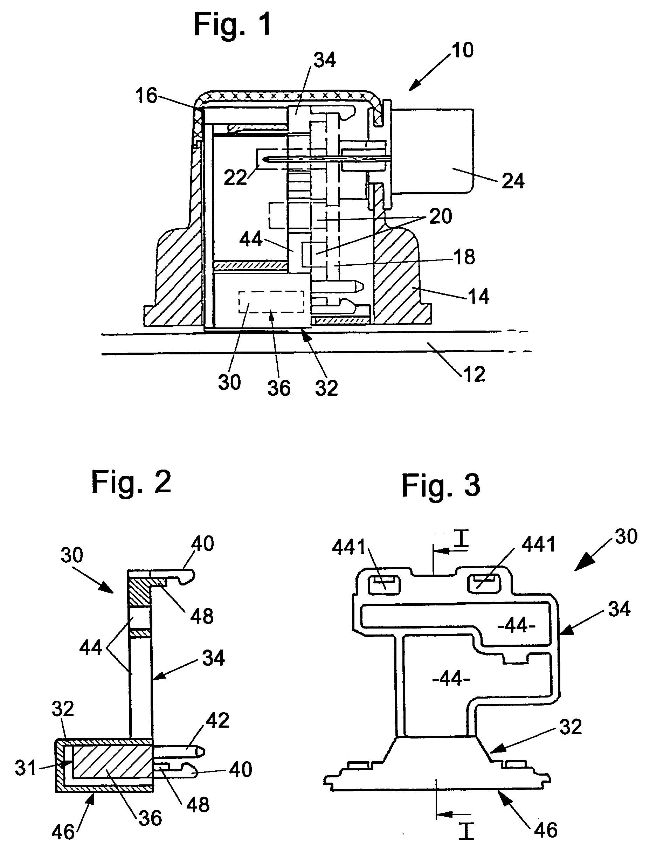

Figur 1 zeigt einen Querschnitt eines Regensensors 10 auf einer Scheibe 12, die beispielsweise eine Kraftfahrzeugscheibe oder eine beliebig andere Scheibe ist, deren Benetzung zu detektieren ist. Der Regensensor 10 wird über nicht dargestellte Klemmverbindungen auf der Scheibe 12 angeklipst.

Der Regensensor 10 weist ein Sensorgehäuse 14 und einen Deckel 16 auf, wobei in dem Gehäuse 14 u.a. eine Leiterplatte 18 und an dieser zu positionierende Bauteile 20, beispielsweise eine Buchsenleiste 22, angeordnet sind. Die Buchsenleiste 22 nimmt die Anschlüsse eines außerhalb des Gehäuses 14 angebrachten Steckers 24 auf. Die Bauteile 20 können ein Sender oder ein Empfänger und andere, einen optischen Meßkreis bildende Elemente sein. Desweiteren weist der Regensensor 10 eine Heizeinrichtung 30 für die Scheibe im Bereich der Meßstrecke des Regensensors 10 auf.

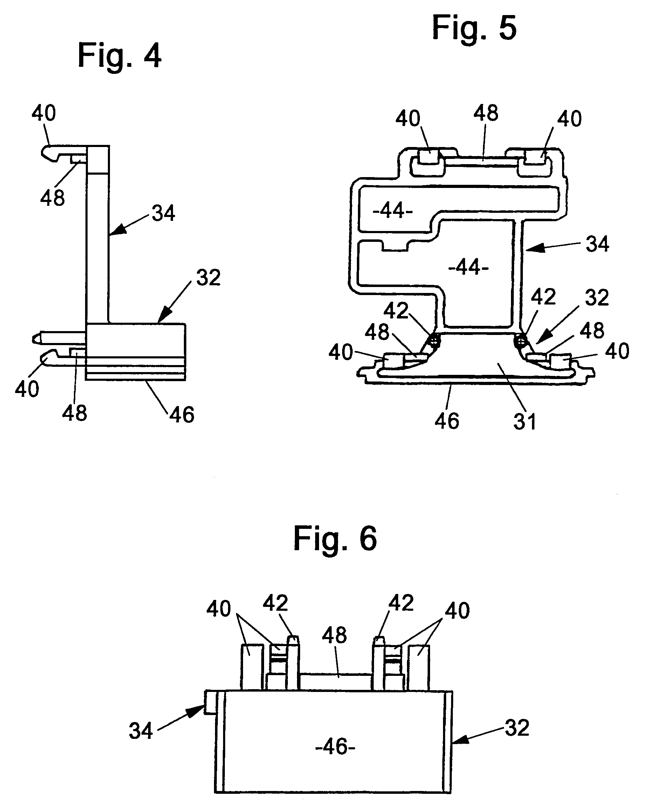

Figur 2 zeigt einen Schnitt durch die Heizeinrichtung 30, entlang der Linie I-I in Figur 3; Figur 4 und 5 die Heizeinrichtung 30 in Seitenansicht; Figur 6 eine Draufsicht auf die zur Scheibe gerichtete Seite der Heizeinrichtung 30.

Die Heizeinrichtung 30 umfaßt im wesentlichen ein Gehäuse 32 und einen flacheren, rechtwinkelig zum Gehäuse angeordneten Ansatz 34, wobei die Heizeinrichtung 30 jedoch einteilig in Kunststoff spritztechnisch hergestellt ist.

Das Gehäuse 32 ist ein einseitig offener Hohlkörper, dessen äußere Form an die zu heizende Meßstrecke angepaßt ist und der Forderung nach optimaler Einpassung der Heizeinrichtung in den Regensensor 10 genügt. Die zur Scheibe 12 gerichtete Seite des Gehäuses 32 ist als rechteckige Grundfläche 46 ausgebildet. Diese liegt direkt an der Scheibe 12 an oder ist gegen die Scheibe 12 gerichtet, so daß die Heizeinrichtung 30 diese heizt. Die Grundfläche 46 der Heizeinrichtung 30 überdeckt beispielsweise den Bereich der Meßstrecke, der zwischen den Bereichen der Strahlungsein- und auskopplung der Scheibe 12 liegt. Die Wandstärke des Gehäuses 32 ist derart gewählt, daß die Wand ausreichende Stabilität und Wärmeübertragung von Heizelement 36 zur Scheibe 12 aufweist.

Der Innenraum 31 des Gehäuses 32 ist für die Aufnahme eines Heizelements 36 vorgesehen, insbesondere ist ein PTC-Widerstand als Heizelement 36 mit einer wärmeleitenden Vergußmasse 38 (z.B. Silikon) vergossen.

An der von der Scheibe weggerichteten Seite des Gehäuses 32 schließt sich der flachere Ansatz 34 an. Der Ansatz 34 weist Aussparungen 44 auf (Figur 3 und 5), deren Anzahl, Größe und Form abhängig von den auf der Leiterplatte 18 zu positionierenden Bauteilen 20 ist. Die obere längliche Aussparung 44 nimmt beispielsweise die Buchsenleiste 22 auf. Weitere Aussparungen 441 ergeben sich durch das Entformen von Schnappben sich im wesentlichen durch die Größe der Leiterplatte 18 und insbesondere durch die Größe und Form der zu positionierenden Bauteile 20.

Die Heizeinrichtung 30 weist Schnappelemente 40 und Verbindungsstifte 42 auf, die in entsprechenden Ausnehmungen oder Bohrungen der im Sensorgehäuse 14 verankerten Leiterplatte 18 aufgenommen werden, so daß die Heizeinrichtung 30 an dieser zu befestigen ist.

Die Heizeinrichtung 30 weist ebenfalls Abstandhalter 48 auf, die die Heizeinrichtung 30 auf einen durch diese vorgegebenen Abstand zur Leiterplatte 18 halten. Die Abstandhalter 48 sind beispielsweise länglich ausgeformt und nahe der Schnappelemente 40 angeordnet.

In einem alternativen Ausführungsbeispiel weist die Heizeinrichtung 30 mindestens zwei Teile auf, insbesondere Gehäuse 32 und Ansatz 34, die beispielsweise mit Schnappelementen und Verbindungsteilen zusammengefügt sind.

## Patentansprüche

1. Sensoreinrichtung (10) zur Erfassung des Benetzungs- und/oder Verschmutzungsgrades von Scheiben (12), insbesondere für Kraftfahrzeuge, wobei ein Bereich der Scheibe (12) als Meßstrecke des Sensors (10) verwendet wird, mit einer Heizeinrichtung (30) zum Beheizen der Meßstrecke, die einen PTC-Widerstand als Heizelement (36) enthält, dadurch gekennzeichnet, daß die Heizeinrichtung (30) ein Gehäuse (32) aufweist, welcher das Heizelement (36) aufnimmt.

2. Sensoreinrichtung nach Anspruch 1, dadurch gekennzeichnet, daß das Heizelement (36) in das Gehäuse (32) mit einer wärmeleitenden Vergußmasse zu vergießen ist.

3. Sensoreinrichtung nach Anspruch 1, dadurch gekennzeichnet, daß das Gehäuse (32) einen einseitig offenen Hohlkörper mit einem Innenraum (31) bildet.

4. Sensoreinrichtung nach Anspruch 1, dadurch gekennzeichnet, daß die Heizeinrichtung (30) Schnappelemente (40) und/oder Verbindungsstifte (42) zur Befestigung der Heizeinrichtung (30) in der Sensoreinrichtung (10), insbesondere an der Leiterplatte (18), aufweist.

5. Sensoreinrichtung nach Anspruch 1, dadurch gekennzeichnet, daß die Heizeinrichtung (30) einen Ansatz (34) am Gehäuse (32) aufweist.

6. Sensoreinrichtung nach Anspruch 5, dadurch gekennzeichnet, daß der Ansatz (34) Aussparungen (44, 441), insbesondere zur Positionierung von Bauteilen (20, 22) auf einer Leiterplatte (18), aufweist.

7. Sensoreinrichtung nach Anspruch 5, dadurch gekennzeichnet, daß das Gehäuse (32) und der Ansatz (34) der Heizeinrichtung (30) einteilig aus Kunststoff herzustellen ist.
